# EUROPEAN PATENT APPLICATION

(11) **EP 4 357 606 A1**
(43) Date of publication of application: **24.04.2024**
(21) Application number: 22202478.8
(22) Date of filing: 19.10.2022
(51) Int. Cl.: F03D 1/06, B29C 70/02, F16B 11/00

(54) **METHODS FOR MANUFACTURING PROTECTIVE ELEMENTS**

(71) Applicant: LM Wind Power A/S, 6000 Kolding (DK)
(72) Inventor: TODD, Paul, Eastleigh, SO53 4SE (GB)
(74) Representative: de Rooij, Mathieu Julien

(57) **Abstract**

The present disclosure relates to protective elements (71) for wind turbine blades (10) such as leading edge protectors and to methods (100, 200) for providing protective elements (71). A method (100) comprises providing (110) a metallic sheet (50) having a first face (54), and a second face (55) opposite to the first face (54); providing (120) surface texture on the first face (54) of the metallic sheet (50); and bonding (130) the first face (54) of the metallic sheet (50) to a support structure.

## Description

### FIELD

The present disclosure relates to protective elements for wind turbine blades and methods for manufacturing protective elements. The present disclosure further relates to wind turbines and leading edge protectors for wind turbine blades.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

During operation of a wind turbine, the outer surface of the wind turbine blades, and in particular the leading edges and adjacent surface areas, may get dirty. For example dust, pollen, insects, salt or ice may accumulate on an outer surface of a wind turbine blade. Wind turbine blades may also erode due to impacts received on the blades, e.g. by rain, hail and particles in the wind. Dirty and/or eroded blades have a more irregular surface than clean blades which can have a significant impact on the air flow around the blades. Roughened blades generally produce less lift and more drag for a given wind flow, which reduces the power produced by the wind turbine. Roughened blades may cause non-negligible reductions of annual energy production (AEP).

A usual way to protect the leading edge from erosion is covering the leading edge with one or more leading edge protectors (LEPs), e.g. with tape or a C-shaped plate. The LEP may be joined to the leading edge by an adhesive. The strength of the bonding between the LEP and the leading edge is relevant for ensuring that the LEP does not separate from the leading edge. If the adhesive does not provide a sufficiently strong bonding and the LEP peels off or falls from the leading edge, repair or replacement of the LEP may be required. This may be time consuming and expensive, especially for offshore wind turbines.

Also, wind turbines are being erected in geographical locations with harsh environmental conditions. In order to extract more energy from the wind, the size of the rotor diameter has increased over the years by increasing the dimensions of the wind turbine blades. Larger blades can achieve higher tip speeds and thereby increase the speed of impact of particles, hail or other with the leading edge. This may increase the speed of degradation of the LEP itself and the bonding between a leading edge protector and the leading edge of the blade.

LEPs based on the use of metallic sheets or plates can provide improved wear characteristics as compared to polymer based LEPs. It has been proposed to use metal LEPs to act as a lightning receptor and therefore additionally offer protection against lightning strikes.

A wind turbine rotor blade generally comprises a body shell formed by two shell halves of a composite material, e.g. glass fiber composites. Achieving a sufficiently strong bond between a metal LEP and a composite material may be particularly challenging. The integrity of the metal to composite interface may degrade rapidly, causing the metallic LEP to separate from the outer surface of the wind turbine blade.

The present disclosure aims at improving the bonding between a metal surface and the surface to which it will be bonded.

### SUMMARY

In an aspect of the present disclosure, a method for providing a protective element for a wind turbine blade is provided. The method comprises providing a metallic sheet with a first face, and a second opposite face. The method comprises providing surface texture on the first face of the metallic sheet. The method further comprises bonding the first face of the metallic sheet to a support structure.

According to this aspect, a strong bonding to the support structure may be achieved. A mechanical bond or retention may be formed besides a chemical bond due to the presence of the surface texture of the metallic sheet.

Throughout the present disclosure, "surface texture" may be understood as local deviations of a surface from a perfectly flat plane. Surface texture may include increased surface roughness or waviness. Particularly, providing surface texture may include providing (regular or irregular) local protrusions or local recesses.

In a further aspect of the disclosure, a protective element for a wind turbine blade is provided. The protective element comprises a backing layer and a metallic sheet. The backing layer comprises a plurality of layers of glass or carbon fibers and resin. A face of the metallic sheet which faces the backing layer comprises a plurality of protrusions and/or recesses.

In a further aspect of the disclosure, a method for manufacturing a leading edge protector is provided. The method comprises applying a mask to a face of a metallic sheet such that the mask partially covers the face of the metallic sheet, leaving a plurality of regions not covered by the mask. The method further comprises plating the plurality of regions not covered by the mask such that a plurality of protuberances is formed thereon. The method further comprises arranging the metallic sheet with fibers in a mold and infusing with resin such that the resin flows between the plurality of protuberances and the fibers. Finally, the method comprises curing the resin.

### BRIEF DESCRIPTION OF THE DRAWINGS

Figure 1 illustrates a perspective view of an example of a wind turbine;
Figure 2A illustrates a perspective view of an example of a wind turbine blade;
Figure 2B schematically illustrates an internal structure of a wind turbine blade;
Figure 3 shows a flow chart of an example of a method;
Figure 4A schematically illustrates an example of a metallic sheet which may be used in methods for providing a protective element for a wind turbine blade;
Figure 4B schematically illustrates an example of a cross-section of a metallic sheet comprising protrusions and recesses;
Figure 5 schematically illustrates an example of a mask being applied to a face of the metallic sheet of figure 4A;
Figure 6 schematically illustrates an example of a pattern of exposed regions;
Figure 7A schematically illustrates an example of protrusions being grown on the exposed regions of figure 5;
Figure 7B schematically illustrates an example of a protrusion grown on an exposed region;
Figure 8 schematically illustrates an example of a metallic sheet being introduced in a press for cold forming;
Figure 9A schematically illustrates an example of a molding process;
Figure 9B schematically illustrates an example of a protective element;
Figure 10 schematically shows a flow chart of an example of a method for manufacturing a leading edge protector.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

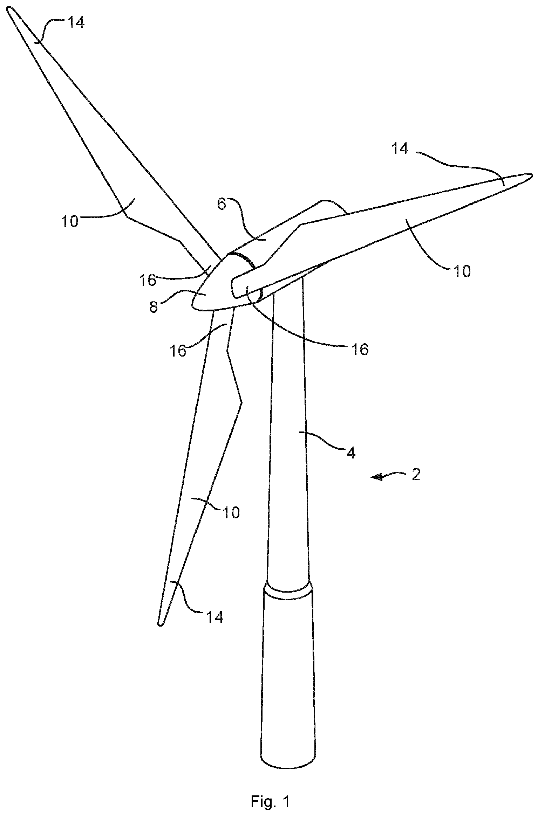

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

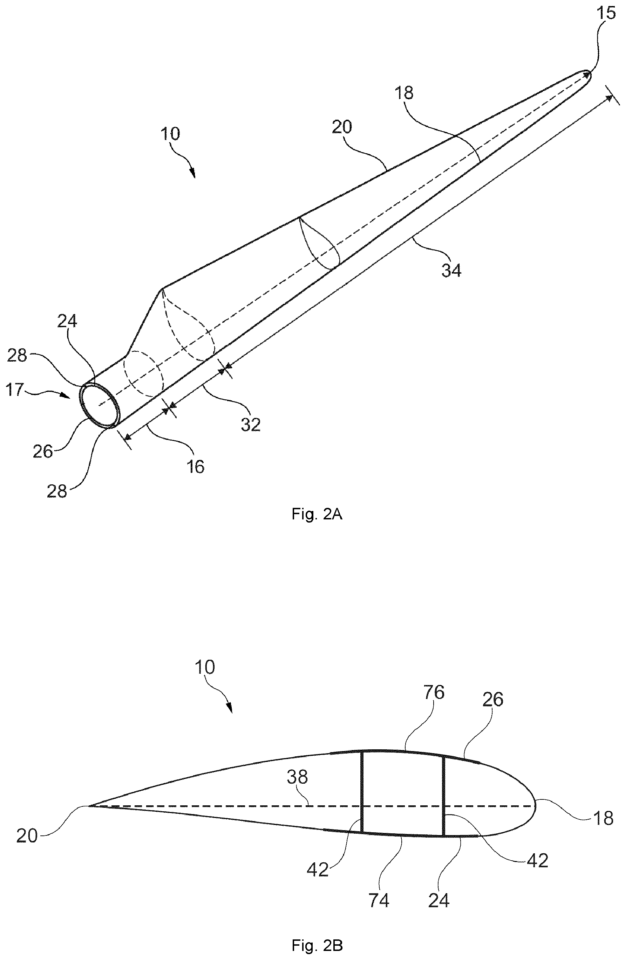

Fig. 2A shows a schematic view of an exemplary wind turbine blade 10. The wind turbine blade 10 has the shape of a conventional wind turbine blade with a root end 17 and a tip end 15 and comprises a root region 16 closest to the hub, a profiled or an airfoil region 34 furthest away from the hub and a transition region 32 between the root region 16 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34, also called the profiled region, has an ideal or almost ideal blade shape with respect to generating lift, whereas the root region 16, due to structural considerations, has a substantially circular or elliptical cross-section, which for instance makes it easier and safer to mount the blade 10 to the hub. The diameter (or the chord) of the root region 16 may be constant along the entire root area 16. The transition region 32 has a transitional profile gradually changing from the circular or elliptical shape of the root region 16 to the airfoil profile of the airfoil region 34. The chord length of the transition region 32 typically increases with increasing distance from the hub. The airfoil region 34 has an airfoil profile with a chord extending between the leading edge 18 and the trailing edge 20 of the blade 10. The width of the chord decreases with increasing distance from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

The wind turbine blade 10 comprises a blade shell comprising two blade shell parts or half shells, a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically a pressure side or upwind blade shell part. The second blade shell part 26 is typically a suction side or downwind blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular outer cross-sectional shape.

Figure 2B is a schematic diagram illustrating a cross sectional view of an exemplary wind turbine blade 10, e.g. of the airfoil region 34 of the wind turbine blade 10. The wind turbine blade 10 comprises a leading edge 18, a trailing edge 20, a pressure side 24, a suction side 26, a first spar cap 74, and a second spar cap 76. The wind turbine blade 10 comprises a chord line 38 between the leading edge 18 and the trailing edge 20. The wind turbine blade 10 comprises shear webs 42, such as a leading edge shear web and a trailing edge shear web. The shear webs 42 could alternatively be a spar box with spar sides, such as a trailing edge spar side and a leading edge spar side. The spar caps 74, 76 may comprise carbon fibers while the rest of the shell parts 24, 26 may comprise glass fibers.

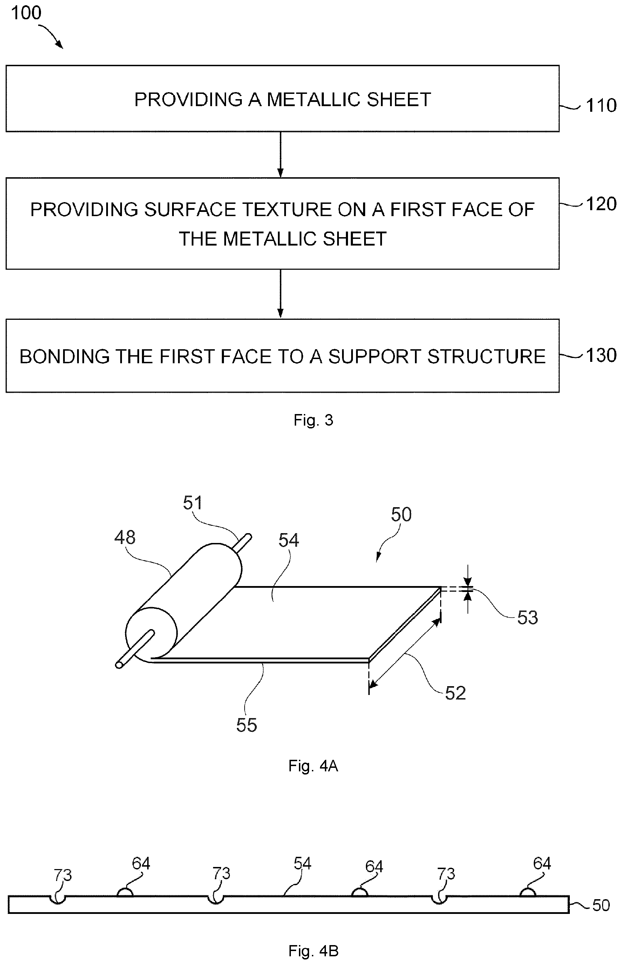

In an aspect of the present disclosure, a method 100 for providing a protective element for a wind turbine blade is provided. An example of method 100 is illustrated in the flow chart of figure 3. A metallic sheet comprising a first face, and a second face is provided at block 110, the second face being opposite to the first face.

The method comprises, at block 120, providing surface texture on the first face of the metallic sheet. In some examples, providing surface texture may comprise creating protrusions and/or recesses. The method further comprises, at block 130, bonding the first face of the metallic sheet to a support structure. In some examples, bonding may comprise bonding the first face comprising protrusions and/or recesses to a support structure.

The presence of the surface texture, e.g. of protrusions and/or recesses, or other textures on the first face of the metallic sheet to be joined to the support structure can provide a mechanical bond besides a chemical bond between the two surfaces to be joined. A better connection between both surfaces may be obtained and the strength of the bonding between the two surfaces may be enhanced.

Figure 4A schematically illustrates a metallic sheet 50. In this example, the metallic sheet 50 is provided as a coil 48 wound a shaft 51 and is being unwound towards the right of the figure. The metallic sheet may be arranged on a machine which unrolls it (not shown). A suitably sized sheet may be cut from the coil 48. Such a sheet may be used to manufacture on or more protective elements. In other examples, the metallic sheet 50 may be provided as a flat sheet without unwinding from a coil.

The metallic sheet 50 has a certain length, which in this example is measured in the direction in which the metallic sheet is unrolled. The metallic sheet 50 has a certain width 52 and a certain thickness 53. The thickness 53 of the metallic sheet may be between 0.3 mm and 1 mm in some examples. For instance, the metallic sheet 50 may have a thickness 53 of 0.5 mm. In general, a thickness 53 of the metallic sheet 50 may be selected as deemed appropriate, e.g. sufficiently thick for obtaining a long lasting protection against erosion while sufficiently thin for not unduly increasing the weight of the blade. The thickness 53 may be constant (within tolerances) along the length and width 52 of the sheet.

The metallic sheet 50 has two faces: a first face 54 and a second face 55. When the metallic sheet 50 is extended, the first face 54 may e.g. be a top face and the second face 55 may be a bottom face.

The metallic sheet 50 may comprise, e.g. be made of, one or more metals or metal alloys. In some examples, the metallic sheet may comprise or may be made of, copper, nickel or chromium or alloys thereof. Copper may particularly be malleable and versatile, and it may be easy to tailor its properties, e.g. by coating it. Therefore, in some examples the metallic sheet 50 may be a copper sheet.

A metal sheet, i.e. a sheet entirely made of one or more metals or metal alloys, and in particular a copper sheet, may provide a particularly strong and electrically conductive metal sheet. A metal sheet may act as a lightning receptor and therefore offer protection against lightning strikes. A metal sheet may be comprised in a lighting protection system (LPS). A LPS generally comprises a lightning receptor, a down conductor and grounding. All these elements should be well connected such that the lightning current may pass safely to the ground.

In other examples, the metallic sheet 50 may comprise more than one layer. One or more of the layers may be electrically non-conductive. An outer layer of the metallic sheet 50 may be electrically conductive. The electrically conductive outer layer, which is the layer on which the protrusions 64 would be grown in some examples, may have been deposited on the other layers of the sheet 50, e.g. chemically or using vacuum deposition techniques or through other suitable techniques for coating.

Figure 4B schematically illustrates an example of a cross-section of a metallic sheet 50 already comprising recesses 73 and protrusions 64. Recesses 73 may in some examples be created by abrading, e.g. by grinding and/or blasting, or electrical discharge machining. Other suitable ways of creating recesses may be used.

The recesses may have different shapes and may form a regular or an irregular pattern. In some examples, the recesses may be elongated, e.g. they may be channels. Channel-like recesses may extend along the first face 54 of the metallic sheet 50 in one or more directions. For instance, one or more recesses 73 may longitudinally extend along a length of the metallic sheet and one or more recesses may longitudinally extend along a width 52 of the metallic sheet. In other examples, the recesses may be dots. Dotted-like recesses may be circular or may have other suitable shapes, e.g. triangular or squared. The first face 54 of the metallic sheet 50 may comprise more than one type of recesses in some examples. In the example of figure 4B, the recesses 73 are channel-like recesses extending in a direction perpendicular to the plane of figure 4B.

The protrusions 64 that are created or provided may be metallic, e.g. they may comprise copper, nickel or alloys thereof. In some examples, protrusions may be created by metal deposition, e.g. laser metal deposition. Other suitable ways of creating protrusions may be used. Similarly to the recesses, the protrusions may have different shapes and they may have a regular or irregular pattern.

The protrusions 64 may be elongated in some examples, e.g. along a length or a width 52 of the metallic sheet 50. The protrusions may be dots in other examples. The first face 54 of the metallic sheet 50 may comprise more than one type of protrusions in some examples. In the example of figure 4B, the protrusions 64 are channel-like recesses extending in a direction perpendicular to the plane of figure 4B.

In some examples, creating protrusions may comprise applying a mask to a first face of the metallic sheet such that one or more inhibited regions are created where the mask is applied and such that a plurality of exposed regions are created where the mask is not applied. Creating protrusions may further comprise growing protrusions on the exposed regions.

Throughout this disclosure, the term "inhibited region" may be understood as a region of a face of a metallic sheet which, due to being covered by a mask, will not be affected by a subsequent suitable action on the metallic sheet for growing a plurality of protrusions thereon. For example, if electroplating is used for growing protrusions on the metallic sheet, the mask will prevent the electroplating to happen on the inhibited regions.

Throughout this disclosure, the term "exposed region" may be understood as a region of a face of a metallic sheet which is not covered by the mask, and therefore will be affected by a subsequent suitable action on the metallic sheet for growing the plurality of protrusions thereon. For example, as the exposed regions are not covered by the mask, a metal may be electroplated on them.

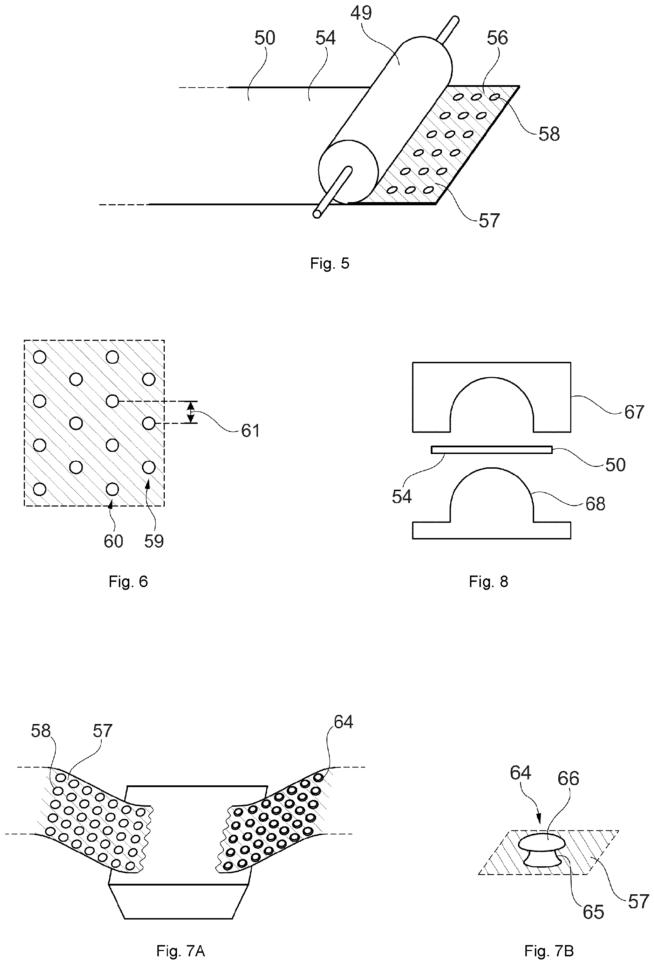

Figure 5 schematically illustrates an example of a mask 56 being applied to a face of the metallic sheet, e.g. the first face 54 of the metallic sheet of figure 4A, such that one or more inhibited regions 57 are created where the mask 56 is applied and such that a plurality of exposed regions 58 are created where the mask 56 is not applied. A printer roller 49 comprising the mask 56 may be used to apply the mask 56 to the sheet face 54 in this example. Other suitable ways of applying a mask 56 known in the art may be used in other examples. In the example of figure 5, a single inhibited region 57 is created. In other examples more separately arranged inhibited regions may be created.

The second face 55 of the metallic sheet 50 may also be masked. In this manner, the exposed regions 58, and therefore the protrusions 64 at a later step, would only be formed in the first face 54 of the metallic sheet 50.

The mask 56 may be non-metallic. The mask may comprise rubber or silicone in some examples. In other examples, the mask may comprise wax, tape or lacquer. In general, the mask may be made of any suitable material that inhibits the growth of protrusions as will now be explained herein.

The plurality of exposed regions 58 may form a pattern, and optionally an array, in some examples. A pattern may be understood as a specific and organized arrangement of elements, in this case exposed regions 58. For example, a plurality of exposed regions 58 may be arranged in a certain manner, forming a unit of repetition. This unit may be "copied" in one or both directions of the sheet face 54, i.e., the unit of repetition may be repeated along a lengthwise and/or a widthwise direction of the sheet face 54. In some examples, a first line 59 formed by consecutive exposed regions 58 and a second line 60 formed by consecutive exposed regions 58 which is parallel to the first line and whose exposed regions 58 are shifted 61 along the direction of the lines may form a unit of repetition. An example of such a unit of repetition and its copy are schematically illustrated in figure 5.

An array may be understood as a plurality of elements, in this case exposed regions 58, arranged in rows and columns. An array is a specific example of a pattern. In the example of figure 6, the exposed regions are arranged in rows parallel to a longitudinal direction of the metallic sheet 50 and in columns parallel to a widthwise direction. The lengthwise direction is perpendicular to the widthwise direction in this example. An angle between the rows and the columns may therefore be 90 °, but other angles between the rows and columns may be possible. I.e., the rows do not need to be perpendicular to the columns. Also, the rows do not need to be parallel to an edge of the sheet face 54 and/or the columns do not need to be parallel to the other contiguous edge of the sheet face.

A pattern of exposed regions 58, for example an array of exposed regions 58, may increase the reliability and homogeneity, predictability of the bonding between the metallic sheet 50 and the airfoil body. Forming a pattern, e.g. an array, of exposed regions may also be easier than forming exposed regions 58 randomly arranged in an industrial process.

In some examples, such as in the examples of figures 4 and 5, the exposed regions 58 may have a circular shape. In other examples, the exposed regions 58 may have other shapes. They may e.g. be squared, triangular or other. In some examples, the exposed regions 58 of a sheet face 54 may have a variety of shapes, e.g. some exposed regions 58 may be circular and some other exposed regions 58 may be squared. The size of the exposed regions 58 may similarly be the same in some examples, e.g. all the exposed regions 58 may have a same size, e.g. diameter, and the size of the exposed regions 58 may differ in other examples, e.g. some circular exposed regions may have a bigger diameter than other circular exposed regions.

The size, shape and/or separation of the exposed regions 58 may be tailored as required. For example, an array of circular exposed regions 58 with a diameter between 2 mm and 5 mm may provide a good bonding strength for a leading edge protector for a wind turbine. The circular exposed regions may e.g. be separated between 4 mm and 8 mm.

Figure 7A schematically illustrates an example of protrusions 64 being grown on the exposed regions 58. Figure 7B schematically shows an example of a protrusion 64 grown on an exposed region. The protrusions 64 may comprise a stem 65 and a cap 66. The stem 65 may support the cap 66 and the cap 66 may be wider than the stem 65. The protrusions 64 may have a mushroom-like shape. The cap 66 being wider than the stem 65 may provide a strong mechanical lock.

In the example of figure 7A, growing the protrusions 64 comprises using electroplating. For example, the metallic sheet 50 may be immersed in an electrolyte bath and the metallic sheet, specifically the exposed regions 58, may be the cathode. The metal which is to be migrated to the exposed regions 58 is generally formed by the anode and the anode may also be immersed in the bath. When current is supplied to the anode, the metal ions of the anode dissolve in the electrolyte bath and migrate to the cathode. In some examples, (pure) copper is electroplated on the exposed regions 58.

In other examples, growing the protrusions 64 may comprise using other types of metal plating for plating the exposed regions 58. I.e. in general any suitable type of metal plating may be used to grow the protrusions 64. For instance, electroless plating or physical vapor deposition may be used.

In some examples, the protrusions 64 may be grown from a same metal as a metal comprised in the metallic sheet 50. I.e. the protrusions 64 may comprise, e.g. be made of, the same metal as the metallic sheet 50. For example, the metallic sheet may comprise, e.g. be made of, copper; and the protrusions 64 may comprise, e.g. be made of, copper. Other metals such as nickel or chromium may also be used, regardless of whether the base material of the metallic sheet 50 includes them or not. Copper and nickel may in particular increase the strength and the electrical conductivity of the metallic sheet 50.

Once the protrusions 64 have been grown, the method may further comprise removing the mask 56 from the face 54 of the metallic sheet 50 comprising the protrusions 64. The mask 56 may be removed by e.g. dipping the metallic sheet 50 in a bath with an appropriate solvent.

The metallic sheet 50 may be cut to form smaller metallic sheets in some examples. In some examples, after providing surface texture on the metallic sheet, the metallic sheet may be cut or trimmed to a suitable size. For instance, if a long metallic sheet is used such as in the example of figure 3, the metallic sheet 50 may be cut into a plurality of metallic sheets. The cut metallic sheets may have final or close to final dimensions. I.e., metallic sheets of a desired size for an envisaged location of the metallic sheet may be obtained with this step. A laser or a water jet may for example be used to cut the metallic sheet. In examples wherein removing the mask 56 and cutting the metallic sheet 50 are required, cutting may be performed after removing the mask. Cutting the metallic sheet 50 may be avoided in examples where e.g. the metallic sheet 50 has a desired (final) size, from the beginning.

The method may further comprise shaping the metallic sheet 50, e.g. after providing surface texture, cutting the metallic sheet to a desired size and prior to bonding. Depending on which surface, in particular to the shape of the surface onto which the metallic sheet 50 is to be bonded, the metallic sheet 50 may be shaped to a desired shape such that it locally matches that surface. For example, if the metallic sheet 50 is to serve as a leading edge protector, the metallic sheet may be bended, drawn or press formed such that the shape of the metallic sheet is complementary to the shape of the leading edge. The leading edge may have a convex cross-section and the metallic sheet may be shaped such that it has a concave side configured to mate with the leading edge (the face with the protrusions and/or recesses or roughness would face the leading edge).

In some examples, shaping the metallic sheet 50 may comprise cold forming the metallic sheet 50. Figure 8 schematically illustrates an example of a metallic sheet 50, e.g. after cutting, being introduced in a press for cold forming. The cold forming press may comprise a pair of complementary upper 67 and lower 68 die units. Each die unit may have a die element, such a steel block, which sandwiches and forces the metallic sheet to adopt a specific shape. The upper die element may be referred to as punch, the lower die element may be referred to as die. The metallic sheet which is introduced into the cold forming press may be referred to as a blank. The blank may thus be introduced into the press between the dies. By moving the upper die with respect to the lower die (e.g. the upper die may be lowered or the lower die may be raised), the blank may be deformed.

In some examples, the support structure to which the metallic sheet 50 is bonded may be or comprise an airfoil body, e.g. a wind turbine blade 10. For example, the metallic sheet 50 may be bonded to a leading edge 18 of a wind turbine blade 10. Bonding may comprise applying an adhesive to the face 54 of the metallic sheet comprising the surface texture, e.g. protrusions 64 and/or recesses, and pressing the metallic sheet 50 to an outer surface of the airfoil body. The adhesive may be a curable adhesive in some examples. Bonding the metallic sheet 50 may in these examples further comprise curing the adhesive. The metallic sheet 50 with the surface texture, e.g. protrusions and/or recesses, may be (part of) a leading edge protector for a wind turbine blade 10 in some examples. Where the metallic sheet 50 is bonded directed to a suitable surface, the metallic sheet may also be referred to as a protective element.

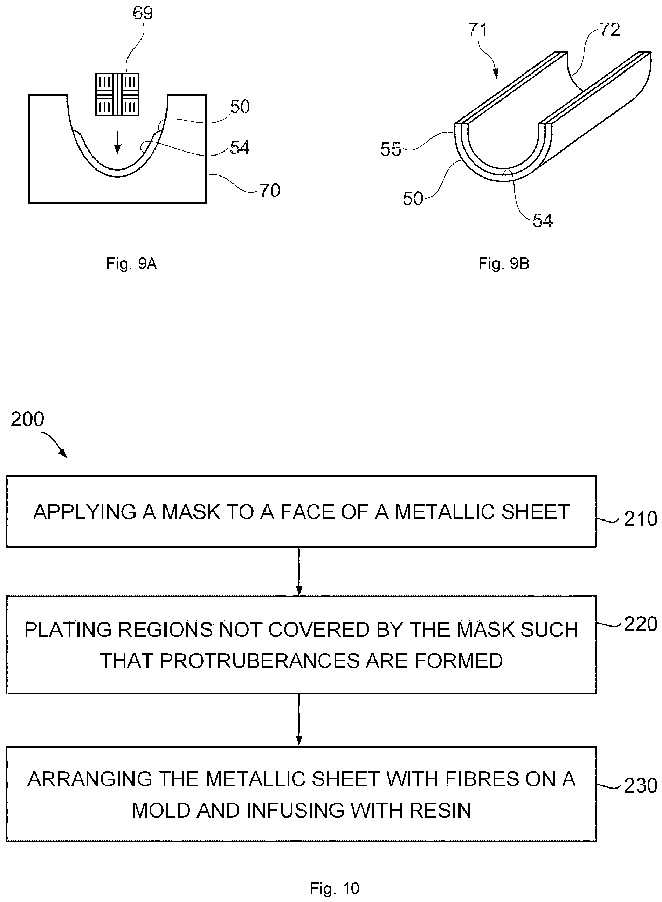

In other examples, bonding the metallic sheet 50 to a support structure may comprise arranging the metallic sheet with a plurality of layers of glass or carbon fibers 69 and infusing the metallic sheet 50 and the plurality of layers of glass or carbon fibers 69 with resin. Figure 9A schematically illustrates an example of a molding process, e.g. an injection molding process, e.g. a reaction injection molding process. The metallic sheet 50 may be arranged in the mold 70. The mold may have a suitable surface for arranging the metallic sheet therein. The glass or carbon fibers 69 and a suitable resin may be then added. As shown in the example of figure 9A, the fibers and resin are arranged over the face 54 of the metallic sheet 50 comprising the protrusions 64 (and/or recesses depending on the example).

After infusing the metallic sheet 50, the metallic sheet may be the outer layer of a formed protective element 71. An example of a protective element 71 is schematically illustrated in figure 9B. The protective element 71 may comprise an inner layer which may be referred to as backing layer 72. The backing layer 72 is to face a surface to which the protective element 71 is to be bonded.

Due to the infusion process, the metallic sheet 50 and the backing layer 72 may be strongly bonded. The bonding interface includes e.g. the protrusions 64 of the corresponding face of the metallic sheet, and the resin may flow around and underneath the protrusions, and therefore a mechanical retention in addition to a chemical bonding can exist between both layers 50, 72. Similar effects may occur if recesses have been provided on the first face or the roughness has been increased on the first face by other methods: the resin may flow into and in between local deviations on the surface and increase a mechanical bond.

The protective element 71 may be joined to an airfoil body, e.g. to a wind turbine blade 10, and specifically to a leading edge 18 of the wind turbine blade 10, later on. A suitable adhesive may be applied to the backing layer 72, and the protective element 71 may be pressed against the wind turbine blade 10, e.g. to a leading edge 18. As the backing layer 72 may comprise the same materials as the wind turbine blade shell, e.g. they may be glass fiber composites, the bonding of the backing layer 72 to the outer surface of the wind turbine blade may be easy to perform and durable. The presence of the protrusions 64 (or other texture in other examples) strengthens the bond to the metallic sheet 50.

The joining of the protective element 71 to the wind turbine blade 10 may occur before the wind turbine blade 10 is installed in a wind turbine, e.g. before the wind turbine blade is lifted to be mounted to a hub over the wind turbine tower. In other examples, the joining may be performed after the wind turbine has been installed, e.g. once the wind turbine installation has been completed but before starting to operate the wind turbine for the first time, or e.g. after a protective element 71 has been damaged and it is to be replaced with the new protective element 71.

In some examples, the outer surface 55 of the metallic sheet 50, i.e. the face of the metallic sheet opposite the face 54 comprising the surface texture, e.g. protrusions 64 and/or recesses, may be plated or otherwise surface treated. For example, a nickel coating may be added through electroplating or chemical vapor deposition. A nickel coating may increase the resistance to erosion. Another suitable coatings, e.g. coating of other metals, may be added to the outer surface 55 of the metallic sheet 50. Plating the outer surface of the metallic sheet may be performed after the metallic sheet 50 has been shaped, e.g. if the metallic sheet 50 is to be bonded directly to a suitable outer surface of an airfoil body, or may be performed once the metallic sheet 50 has been incorporated into a protective element 71.

According to a further aspect of the disclosure, a protective element 71 for a wind turbine blade 10 is provided. The protective element 71 comprises a backing layer 72 and a metallic sheet 50. The backing layer 72 comprises a plurality of layers of glass or carbon fibers and resin. A face 54 of the metallic sheet 50 which faces the backing layer 72 comprises surface texture, e.g. a plurality of protrusions 64 and/or recesses.

An example of a protective element 71 is shown in figure 9B. As previously explained, the backing layer 72 and the metallic sheet 50 may have been infused, e.g. through a reaction injection molding process. Different types of resins may be used e.g. epoxy and others. The backing layer and the metallic sheet may be in direct contact. The bonding between both layers may be strong due to the presence of the protrusions 64 and/or recesses in the interface between the metallic sheet 50 and the backing layer 72. A mechanical bond in addition to a chemical bond may keep both layers 50, 72 together.

In some examples, the protective element 71 may be a leading edge protector for a wind turbine blade 10. In these or other examples, the protective element 71 may be a lightning receptor. I.e., in some examples the protective element 71 may be used both as a leading edge protector against erosion and as a protector against lightning striking, and in other examples, the protective element 71 may be used for one of these purposes only.

In some examples, the metallic sheet 50 may comprises copper. For example, the metallic sheet 50 may be a copper sheet.

In some examples, a face 55 of the metallic sheet opposite the face 54 of the metallic sheet comprising the surface texture, e.g. a plurality of protrusions 64 and/or recesses, is plated, e.g. with nickel. A nickel coating, e.g. of a copper sheet, may improve the resistance of the metallic sheet against erosion.

In a further aspect of the present disclosure, a wind turbine blade 10 is provided. The wind turbine blade 10 comprises the protective element 71 bonded to an outer surface of the wind turbine blade 10 by the backing layer 72. A suitable adhesive may be used for bonding the backing layer 72 to the outer surface of the wind turbine blade 10.

In some examples, the protective element 71 is bonded to the leading edge 18 of the wind turbine blade 10. More than one protective element 71 may be bonded to the wind turbine blade 10, e.g. the leading edge 18 of the wind turbine blade 10 may comprise more than one protective element 71 bonded thereon.

Still in a further aspect of the disclosure a wind turbine 2 is provided. The wind turbine comprises a wind turbine blade 10 according to the previous aspect. All the wind turbine blades 10 of the wind turbine 2 may comprise at least one protective element 71 as previously described.

In some examples, the wind turbine 2 may further comprise a down conductor and a grounding such that a lighting protection system is formed. The protective element 71 would act as a lightning receptor.

Still in a further aspect of the disclosure, a method 200 for manufacturing a leading edge protector is provided. The method is illustrated in the flow chart of figure 10. The method comprises, at block 210, applying a mask 56 to a face 54 of a metallic sheet 50 such that the mask 56 partially covers the face 54 of the metallic sheet 50, leaving a plurality of regions 58 not covered by the mask 56.

The method further comprises, at block 220, plating the plurality of regions 58 not covered by the mask 56 such that a plurality of protuberances 64 is formed thereon 58. The method further comprises, at block 230, arranging the metallic sheet 50 and glass or carbon fibers 69 in a mold such that the plurality of protuberances 64 faces the glass or carbon fibers 69. Resin infusion may then take place to provide a strong bond between the metallic sheet, the fibers and the resin. Then, the resin may be cured.

The fibers may be provided in any suitable form, e.g. fiber mats may be used, or any piece of cloth of fabric comprising fibers. The fibers may be arranged in strands or rovings. The fiber may be natural or synthetic fibers and particularly may be any type of fiber suitable for fiber reinforced composites, and more particularly may be glass fibers or carbon fibers. The fibers may have a variety of different orientations e.g. the fiber mats may be uniaxial, biaxial, multi-axial or different.

In some examples, plating may be electroplating. I.e., the protuberances 64 may be grown by electroplating.

In some examples, the metallic sheet 50 may be made of copper. In these or other examples, the protuberances 64 may be made of copper.

In some examples, the plurality of regions 58 not covered by the mask 56 may form an array. I.e., the plurality of regions not covered by the mask may form a growth matrix for the protuberances 64.

Details and explanations as provided for method 100 of figure 3 may be applied to method 200 and *vice versa.*

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for providing a protective element (71) for a wind turbine blade (10) comprising:
providing (110) a metallic sheet (50) having a first face (54), and a second face (55) opposite to the first face (54),
providing (120) surface texture on the first face (54) of the metallic sheet (50); and
bonding (130) the first face (54) of the metallic sheet (50) to a support structure.

2. The method of claim 1, wherein the metallic sheet (50) comprises copper, nickel, chromium or alloys thereof.

3. The method of claim 1 or claim 2, wherein providing (120) surface texture on the first face (54) of the metallic sheet (50) comprises creating protrusions (64) and/or recesses (73) on the first face (54) of the metallic sheet (50).

4. The method of claim 3, wherein creating protrusions (64) comprises:
applying a mask (56) to the first face (54) of the metallic sheet (50) such that one or more inhibited regions (57) are created where the mask (56) is applied and such that a plurality of exposed regions (58) are created where the mask (56) is not applied; and
growing protrusions (64) on the exposed regions (58).

5. The method of claim 4, wherein growing the protrusions (64) comprises using plating, optionally electroplating.

6. The method of claim 4 or claim 5, wherein the protrusions (64) are grown from a same metal as the metallic sheet (50).

7. The method of any of the preceding claims, further comprising shaping the metallic sheet (50) prior to bonding (130).

8. The method of any of the preceding claims, wherein the bonding (130) of the metallic sheet (50) to the support structure comprises arranging the metallic sheet (50) with a plurality of layers of glass or carbon fibers (69) and infusing the metallic sheet (50) and the plurality of layers of glass or carbon fibers (69) with resin.

9. The method of any of the preceding claims, further comprising plating the second face (55) of the metallic sheet (50).

10. A protective element (71) for a wind turbine blade (10) comprising:
a backing layer (72) comprising a plurality of layers of glass or carbon fibers and resin; and
a metallic sheet (50);
wherein a first face (51) of the metallic sheet (50) which faces the backing layer (72) comprises surface texture, optionally a plurality of protrusions (64) and/or recesses (73).

11. The protective element of claim 10, wherein the protective element (71) is a leading edge protector for a wind turbine blade (10).

12. The protective element of claim 10 or claim 11, wherein the metallic sheet (50) comprises copper or a copper alloy.

13. The protective element of any of claims 10 - 12, wherein a second face (55) of the metallic sheet (50) opposite the first face (54) is plated.

14. A wind turbine blade (10) comprising the protective element (71) of any of claims 10 - 13 bonded to an outer surface of the wind turbine blade (10) by the backing layer (72).

15. A wind turbine (2) comprising one or more of the wind turbine blades (10) of claim 14.
